# FASCICULE DE BREVET EUROPEEN

(11) **EP 2 406 096 B1**
(45) Date de publication et mention de la délivrance du brevet: **07.11.2012**
(21) Numéro de dépôt: 10714925.4
(22) Date de dépôt: 05.03.2010
(51) Int. Cl.: B60K 20/02

(54) **DISPOSITIF DE COMMANDE D'UNE BOITE DE VITESSES ROBOTISEE POUR VEHICULE AUTOMOBILE**
VORRICHTUNG ZUR STEUERUNG EINES ROBOTERGETRIEBES EINES KRAFTFAHRZEUGES
DEVICE FOR CONTROLLING A ROBOTISED GEARBOX OF A MOTOR VEHICLE

(30) Priorité: 12.03.2009 FR 0951539
(43) Date de publication de la demande: 18.01.2012
(73) Titulaire: Dura Automotive Systems SAS, 91570 Bièvres (FR)
(72) Inventeur: THOORIS, Arnaud, F-92190 Meudon (FR)
(74) Mandataire: Thivillier, Patrick
(86) Numéro de dépôt international: PCT/FR2010/050385
(87) Numéro de publication internationale: WO 2010/103222

(56) Documents cités:
- DE-A1-102007 042 650
- FR-A- 2 916 032
- JP-A- 2006 177 401
- US-A- 6 037 930

## Description

L'invention se rattache au secteur technique des moyens de commande d'une boîte de vitesses, notamment pour véhicules automobiles.

Plus particulièrement, l'invention concerne la commande d'une boîte automatique pilotée ou d'une boîte manuelle pilotée. On désignera ci-après, dans la suite de la description, par le terme de boîte de vitesses robotisée l'un quelconque de ce type de boîte de vitesses.

D'une manière parfaitement connue pour un homme du métier, la commande d'une boîte de vitesses robotisée peut être effectuée, soit par un levier seul, soit par la combinaison d'un levier et de palettes généralement associées au volant.

Lorsque la commande est assurée uniquement par un levier, ce dernier permet un mode de commande manuel dit séquentiel et un mode de commande automatique.

En mode séquentiel, les impulsions exercées sur le levier permettent, dans un sens, de monter les vitesses et, dans l'autre sens, de descendre les vitesses. En mode automatique, le levier occupe généralement les différentes positions P (Park), R (Reverse), N (Neutre), D (Drive).

Lorsque le levier est combiné avec les palettes, ce dernier permet généralement de passer uniquement du mode manuel séquentiel au mode automatique. En mode séquentiel, la montée et la descente des vitesses s'effectue par les palettes.

On a proposé également, comme il ressort de l'enseignement du brevet FR 2.916.032 selon le préambule de la revendication 1, dont le demandeur de la présente est également titulaire, de sélectionner le mode manuel et le mode automatique, à partir d'un même organe de commande, palette ou levier, et ceci sous l'effet de simples impulsions y compris en mode automatique pour l'engagement des positions P, R, N, D.

A partir de cet état de la technique, le problème que se propose de résoudre l'invention est de ne plus utiliser un levier et/ou des palettes pour la sélection et la commande d'une boîte de vitesses robotisée, mais de pouvoir utiliser un écran tactile.

On a déjà proposé d'utiliser des écrans tactiles dans le domaine automobile, par exemple pour la commande d'un système de navigation embarquée.

Toutefois, ce type de commande tactile ne peut pas être utilisée en tant que telle pour des commandes sécuritaires, notamment dans le domaine automobile, compte tenu des risques importants de facilement se tromper et de générer des commandes involontaires ou lorsqu'un objet tombe sur l'écran.

Il en résulte donc que l'utilisation d'un écran tactile, dans le domaine de l'automobile, notamment pour la commande d'une boîte de vitesses robotisée, nécessite de sécuriser l'écran afin d'être certain de valider la fonction souhaitée avec pour objectif de pouvoir utiliser l'écan, d'une manière intuitive.

Pour remédier à ces inconvénients et résoudre un tel problème, il a été conçu et mis au point, selon l'invention, un dispositif de commande d'une boîte de vitesses robotisée pour véhicule automobile assujettie à un calculateur et à une unité de contrôle électroniques pour passer, à volonté, d'un mode manuel selon lequel on monte ou on descend les vitesses en agissant sur un organe de manoeuvre, à un mode automatique pour l'engagement des positions Park (P), Reverse (R), Neutre (N), Drive (D) au moyen dudit organe.

Selon l'invention, l'organe de manoeuvre est un écran tactile assujetti à un algorithme qui comprend les étapes suivantes :
- une étape attente ;
- une étape de mémorisation des coordonnées d'un appui digital ;
- une étape de mémorisation des coordonnées de relâchement de l'appui digital ;
- une étape de calcul d'un vecteur entre les deux points (appui et relâchement) ;
- une étape test selon laquelle on compare la longueur du vecteur à une plage de longueur déterminée :
   ■ si la longueur du vecteur est inférieure à la longueur prédéfinie, on retourne à l'étape attente ;
   ■ si la longueur du vecteur est supérieure à la longueur prédéfinie, on valide une étape de test selon laquelle on compare l'orientation du vecteur à une plage angulaire prédéfinie ;
- si l'orientation du vecteur n'entre pas dans la plage angulaire prédéfinie, on retourne à l'étape attente ;
- si l'orientation du vecteur entre dans la plage angulaire prédéfinie, on valide la commande souhaitée P.R.N.D., par exemple

Il en résulte que la sécurisation de l'écran tactile, pour la commande et la sélection des vitesses, s'effectue par l'analyse des coordonnées du vecteur d'appui.

A partir de cette conception de base, l'écran tactile de commande peut être combiné avec d'autres moyens, afin d'augmenter encore la sécurité, pour être certain que l'appui et le déplacement digital sur ledit écran, correspondent à la fonction réellement souhaitée.

Dans une première forme de réalisation, l'écran tactile est équipé d'une forme ergonomique apte à assurer le positionnement de la main, ladite forme étant équipée d'au moins un capteur de détection de la présence de la main sur ladite forme pour autoriser l'activation dudit écran qui est assujetti à un algorithme de commande de passage et de sélection des vitesses.

Le capteur de proximité est du type capacitif.

La forme ergonomique fait partie d'un support où est monté l'écran.

Dans une autre forme de réalisation, au-dessus de l'écran, est disposé au moins un élément de protection de la totalité de l'écran et présentant au moins une découpe pour donner un libre accès digital audit écran selon au moins une zone apte à permettre un appui et/ou un déplacement du doigt correspondant à l'activation d'une fonction. La découpe correspond à une grille de passage et de sélection d'une boîte de vitesses robotisée pour véhicule automobile.

L'invention est exposée ci-après plus en détail à l'aide des figures des dessins annexés dans lesquels :
- la figure 1 est un synoptique du fonctionnement de la validation des commandes de l'écran tactile ;
- la figure 2 montre, à titre d'exemple, la description des actions suivant la zone de relâchement de l'appui par rapport au point d'appui ;
- la figure 3 montre des exemples de validation ou de non validation de la commande souhaitée, en fonction de la longueur et de l'orientation du vecteur d'appui ;
- la figure 4 est une vue en perspective, à caractère schématique, montrant l'écran de commande tactile combiné avec une forme ergonomique d'appui pour l'activation ou non dudit écran ;
- la figure 5 montre une forme de réalisation selon laquelle l'écran est combiné avec un élément de protection présentant une découpe correspondant aux différentes actions souhaitées.

Selon une caractéristique à la base de l'invention, l'organe de manoeuvre pour la commande des boîtes de vitesses robotisées est constitué par un écran tactile (1). Autrement dit, l'écran tactile (1), de la même façon qu'un levier ou que des palettes, est assujetti, d'une manière parfaitement connue pour un homme du métier, à un calculateur et à une unité de contrôle électronique pour passer, à volonté, d'un mode manuel séquentiel, selon lequel on monte et on descend les vitesses, à un mode automatique pour l'engagement des positions P, R, N, D.

L'invention concerne plus particulièrement la sécurisation de l'écran tactile (1) pour éviter toute validation non volontaire d'une action correspondant au passage et/ou à la sélection d'une vitesse. Autrement dit, selon l'invention, une commande ou action ne sera confirmée qu'après un déplacement sur l'écran dans des conditions déterminées, afin d'éviter toute erreur de manipulation et en permettant une utilisation sans être obligé de regarder l'écran.

Généralement, selon l'état de la technique, une commande est validée par pression sur une aire de l'écran tactile. Ce sont donc les coordonnées du point de pression qui pourront définir la commande à exécuter.

Selon les caractéristiques à la base du dispositif selon l'invention, la commande est validée après un mouvement du point de pression. Autrement dit, il convient de définir et de calculer le sens, la longueur et la direction d'un vecteur entre les points de début et de fin de pression. Si la norme du vecteur est trop faible, en ce sens qu'elle n'entre pas dans le champ des caractéristiques prédéfinies du vecteur, la commande ne sera pas exécutée.

D'une manière avantageuse, la zone de début de pression peut être soit définie, soit totalement libre. Dans ce dernier cas, la commande peut être exécutée sans pour autant obliger l'utilisateur de regarder l'écran tactile.

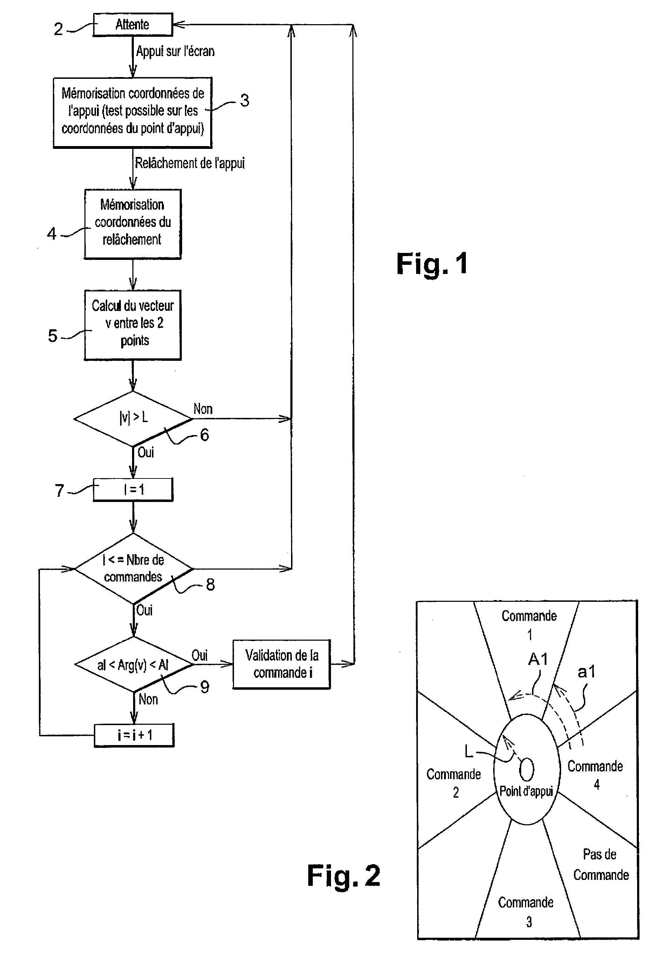

On renvoie à la figure 2 qui montre quatre caractéristiques du vecteur correspondant chacune à l'exécution d'une commande, à savoir commande 1, commande 4, commande 2, commande 3. Par exemple, ces commandes 1, 2, 3, 4 correspondent aux positions P, R, N, D de la boîte de vitesses. Les diagrammes A, B, C, D, correspondent au cas « idéal » pour exécuter la commande souhaitée à partir d'un point de pression jusqu'au point de relâchement générant un vecteur, par exemple, de bas en haut pour la commande 1, de gauche à droite pour la commande 4, de droite à gauche pour la commande 2, et de haut en bas pour la commande 3.

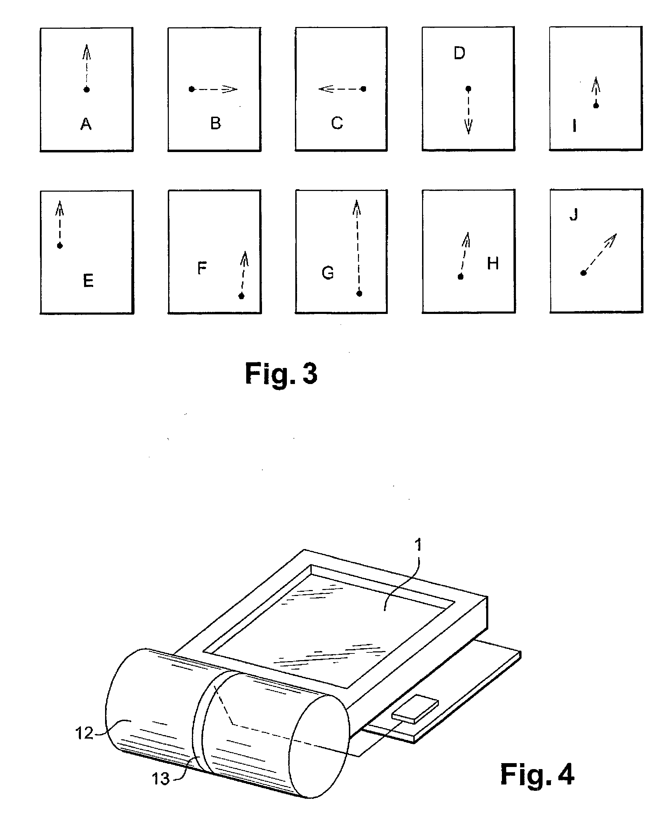

Bien évidemment, pour chacune de ces commandes, entre le point d'appui et de relâchement, une zone pour chacune des commandes 1, 2, 3 et 4, est autorisée pour valider ladite commande (figure 2). Par exemple, à la figure 3, on voit la validation de la commande (1) avec différents points de départ du point d'appui et de vecteurs de longueur de direction différente (diagrammes E, F, G, H). Par contre, le diagramme (I) montre un vecteur de longueur insuffisante et le diagramme (J) un vecteur dont l'orientation va au-delà de la zone admise. Aux diagrammes (I) et (J), la commande n'est pas validée.

La synoptique du fonctionnement de la validation des commandes est illustrée figure 1. L'écran tactile (1) est assujetti à un algorithme qui comprend les étapes suivantes :
- une étape attente (2) ;
- après appui sur l'écran (1), mémorisation des coordonnées de l'appui étape (3) ;
- relâchement de l'appui et mémorisation des coordonnées du relâchement (étape(4)).

A partir de ces deux données mémorisées (appui et relâchement), il est possible de calculer, par un logiciel approprié, le vecteur entre ces deux points (étape (5)).

Cette étape de calcul (5) est suivie d'une étape test (6) selon laquelle on compare la longueur du vecteur à une longueur prédéfinie (L). Si la longueur du vecteur est inférieure à la longueur (L), on retourne à l'étape attente (2). Si la longueur du vecteur est égale ou supérieure à la longueur (L), on valide, pour chacune des commandes 1, 2, 3, 4, par exemple les tapes (7) et (8), une étape test (9) selon laquelle on compare le sens et l'orientation du vecteur par rapport à la plage prédéfinie.

Si l'orientation et le sens du vecteur n'entrent pas dans la plage prédéfinie, on retourne à l'étape attente (2), si l'orientation et le sens de ce vecteur entrent dans la plage prédéfinie, on valide la commande souhaitée commande 1, commande 2, commande 3, commande 4, correspondant, par exemple, aux positions P, R, N, D, comme indiqué.

Ces dispositions techniques permettent donc de valider une commande uniquement si les conditions et caractéristiques prédéterminées du vecteur entre un point d'appui et un point de relâchement sur l'écran tactile, sont respectées. On évite, par conséquent, toute commande involontaire et intempestive.

A partir de ce concept de base du calcul des coordonnées du vecteur pour valider ou non une commande, il est donc possible d'augmenter la sécurité de fonctionnement en combinant l'écran tactile (1) avec des moyens spécifiques.

A la figure 4, l'écran tactile (1) est équipé d'une forme ergonomique (12) apte à assurer le positionnement de la main. Cette forme (12) est équipée d'au moins un capteur (13) de détection de la présence de la main sur ladite forme pour assurer l'activation de l'écran (1). En absence de détection, aucune commande de l'écran tactile n'est possible. Le capteur de proximité (13) peut être de tout type connu et approprié, tel qu'interrupteur à contact mécanique, capteur optique, capteur capacitif, capteur inductif. Avantageusement, le capteur est du type capacitif afin de détecter la proximité de la main au niveau de la forme ergonomique (12). La présence de la main détectée par le capteur (13) est traitée par un logiciel afin d'activer l'écran.

On obtient, par conséquent, une double sécurité, d'une part, en détectant la présence de la main à un endroit déterminé de l'écran et, d'autre part, en calculant le vecteur résultant du point d'appui et du point de relâchement de la commande considérée.

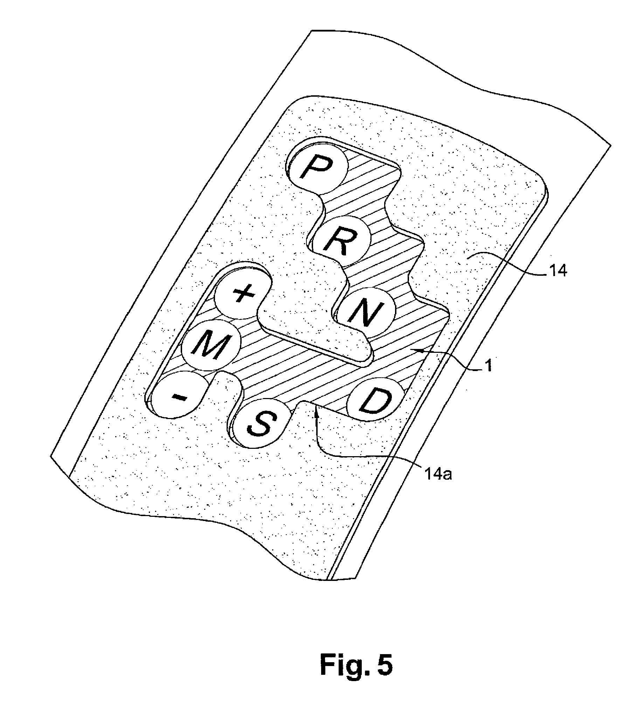

A la figure 5, l'écran (1) comprend au moins un élément de protection (14) présentant au moins une découpe (14a) pour donner un libre accès digital audit écran, selon au moins une zone apte à permettre un appui et/ou un déplacement du doigt correspondant à l'activation de la commande souhaitée. Par exemple, dans l'exemple illustré, la découpe (14a) correspond à une grille de passage et de sélection d'une boîte de vitesse robotisée avec les positions P, R, N, D et M+ et M-. Cet élément de protection (14) n'est pas en contact avec l'écran tactile et peut être réalisé en tout matériau.

Ces dispositions permettent avantageusement de pouvoir utiliser l'écran pour la commande de la boîte de vitesses, sans être obligé de regarder l'écran en tant que tel. A noter également que ces dispositions permettent de déterminer, d'une manière précise, le positionnement du point d'appui du vecteur considéré.

Les avantages ressortent bien de la description.

## Revendications

1. Dispositif de commande d'une boîte de vitesses robotisée pour véhicule automobile assujettie à un calculateur et à une unité de contrôle électroniques pour passer, à volonté, d'un mode manuel selon lequel on monte ou on descend les vitesses en agissant sur un organe de manoeuvre, à un mode automatique pour l'engagement des positions Park (P), Reverse (R), Neutre (N), Drive (D) au moyen dudit organe,
**caractérisé en ce que** l'organe de manoeuvre est un écran tactile (1) assujetti à un algorithme qui comprend les étapes suivantes :
- une étape attente (2) ;
- une étape (3) de mémorisation des coordonnées d'un appui digital ;
- une étape (4) de mémorisation des coordonnées de relâchement de l'appui digital ;
- une étape (5) de calcul d'un vecteur entre les deux points (appui et relâchement) ;
- une étape test (6) selon laquelle on compare la longueur du vecteur à une plage de longueur déterminée :
■ si la longueur du vecteur est inférieure à la longueur prédéfinie, on retourne à l'étape attente ;
■ si la longueur du vecteur est égale ou supérieure à la longueur prédéfinie, on valide une étape de test (9) selon laquelle on compare l'orientation du vecteur à une plage angulaire prédéfinie ;
- si l'orientation du vecteur n'entre pas dans la plage angulaire prédéfinie, on retourne à l'étape attente (2) ;
- si l'orientation du vecteur entre dans la plage angulaire prédéfinie, on valide la commande souhaitée P.R.N.D., par exemple

2. Dispositif selon la revendication 1, **caractérisé en ce que** l'écran tactile (1) est équipé d'une forme ergonomique (12) apte à assurer le positionnement de la main, ladite forme (12) étant équipée d'au moins un capteur (13) de détection de la présence de la main sur ladite forme pour autoriser l'activation dudit écran qui est assujetti à un algorithme de commande de fonctions.

3. Dispositif selon la revendication 2, **caractérisé en ce que** le capteur de proximité (13) est du type capacitif.

4. Dispositif selon la revendication 2, **caractérisé en ce que** la forme ergonomique (12) ait partie d'un support où est monté l'écran.

5. Dispositif selon la revendication 1, **caractérisé en ce que**, au-dessus de l'écran total (1) est disposé au moins un élément de protection (14) de la totalité de l'écran et présentant au moins une découpe (14a) pour donner un libre accès digital audit écran selon au moins une zone apte à permettre un appui et/ou un déplacement du doigt correspondant à l'activation d'une fonction.

6. Dispositif selon la revendication 5, **caractérisé en ce que** la découpe (14a) correspond à une grille de passage et de sélection d'une boîte de vitesses robotisée pour véhicule automobile

## Claims

1. Device for controlling a robotised gearbox for a motor vehicle, the gearbox being controlled by a computer and an electronic control unit in order to change, as required, from a manual mode whereby one selects higher or lower gears by actuating an operating control to an automatic mode in order to engage Park (P), Reverse (R), Neutral (N) and Drive (D) settings by means of said control,
**characterised in that** the operating control is a touchscreen (1) controlled by an algorithm which comprises the following steps:
- A wait step (2);
- A step (3) in which the coordinates of a finger touch are stored;
- A step (4) in which the coordinates of a finger release are stored;
- A step (5) in which a vector between the two points (touch and release) is computed;
- A test step (6) in which the length of the vector is compared to a predefined length range:
• If the length of the vector is less than the predefined length, one goes back to the step previously reached;
• If the length of the vector is equal to or greater than the predefined length, one confirms a test step (9) in which the orientation of the vector is compared to a predefined angular range;
- If the orientation of the vector does not fall within the predefined angular range, one goes back to the step previously reached (2);
- If the orientation of the vector falls within the predefined angular range, one confirms the desired command, e.g. P.R.N.D.

2. Device as claimed in claim 1, **characterised in that** touchscreen (1) is equipped with an ergonomic shape (12) suitable for ensuring positioning of the hand, said shape (12) being equipped with at least one sensor (13) for detecting the presence of the hand on said shape in order to enable activation of said screen which is controlled by a function control algorithm.

3. Device as claimed in claim 2, **characterised in that** proximity sensor (13) is of the capacitive type.

4. Device as claimed in claim 2, **characterised in that** ergonomic shape (12) is part of a support on which the screen is mounted.

5. Device as claimed in claim 1, **characterised in that**, over the entire screen (1), there is at least one element (14) that protects the entire screen and has at least one cut-out (14a) affording free fingertip access to said screen in at least one area suitable for allowing touching and/or dragging the finger in a manner that corresponds to activating a function.

6. Device as claimed in claim 5, **characterised in that** cut-out (14a) corresponds to a gear change and selection grid of a robotised gearbox for a motor vehicle.

## Patentansprüche

1. Schaltvorrichtung eines robotisierten Schaltgetriebes für Automobile abhängig von einem Rechner und einer elektronischen Kontrolleinheit, um beliebig von einem manuellen Betrieb, bei dem durch Betätigung eines Bedienungsorgans herauf- oder heruntergeschaltet wird, auf einen Automatikbetrieb zum Schalten der Positionen Park (P), Reverse (R), Neutral (N), Drive (D) mittels des besagten Organs zu wechseln,
**dadurch gekennzeichnet, dass** das Bedienungsorgan ein Touchscreen (1) ist, der von einem, Algorithmus mit den nachstehenden Stufen abhängig ist:
- eine Wartestufe (2);
- eine Stufe (3) zur Speicherung der Koordinaten eines Fingerdrucks;
- eine Stufe (4) zur Speicherung der Koordinaten für das Nachgeben des Fingerdrucks;
- eine Stufe (5) zur Berechnung eines Vektors zwischen den beiden Punkten (Druck und Nachgeben);
- eine Teststufe (6), bei der die Länge des Vektors mit einem vorgegebenen Längenbereich verglichen wird:
• wenn die Länge des Vektors geringer ist als die vorgegebene Länge, wird zur Wartestufe zurückgekehrt;
• wenn die Länge des Vektors gleich oder höher ist als die vorgegebene Länge, wird eine Teststufe (9) validiert, bei der die Ausrichtung des Vektors mit einem vorgegebenen Winkelbereich verglichen wird;
- wenn die Ausrichtung des Vektors nicht im vorgegebenen Winkelbereich erfolgt, wird zur Wartestufe (2) zurückgekehrt;
- wenn die Ausrichtung des Vektors nicht im vorgegebenen Winkelbereich erfolgt, wird die gewünschte Schaltung, zum Beispiel P.R.N.D., bestätigt.

2. Vorrichtung nach Anspruch 1, **dadurch gekennzeichnet, dass** der Touchscreen (1) eine ergonomische Form (12) besitzt, die geeignet ist, die Positionierung der Hand zu gewährleisten, wobei die besagte Form (12) mit mindestens einem Sensor (13) für die Erkennung der Präsenz der Hand auf der besagten Form ausgestattet ist, um die Aktivierung des besagten Bildschirms freizugeben, der von einem Algorithmus für die Funktionssteuerung abhängig ist.

3. Vorrichtung nach Anspruch 2, **dadurch gekennzeichnet, dass** es sich bei dem Näherungssensor (13) um einen kapazitiven Sensor handelt.

4. Vorrichtung nach Anspruch 2, **dadurch gekennzeichnet, dass** die ergonomische Form (12) Teil einer Halterung ist, auf der der Bildschirm angebracht ist.

5. Vorrichtung nach Anspruch 1, **dadurch gekennzeichnet, dass** über dem ganzen Bildschirm (1) mindestens ein Schutzelement (14) für den gesamten Bildschirm angeordnet ist und mindestens einen Ausschnitt (14a) aufweist, damit der Bildschirm in mindestens einem Bereich, der zur Aktivierung einer Funktion einen Druck und/oder eine Verlagerung des Fingers erlaubt, für den Finger frei zugänglich ist.

6. Vorrichtung nach Anspruch 5, **dadurch gekennzeichnet, dass** der Ausschnitt (14a) einer Schalt- und Wahlmaske eines robotisierten Schaltgetriebes für Automobile entspricht.
